Europäisches Patentamt

European Patent Office

Office européen des brevets

(11) Publication number: **0 098 066**
**B1**

# EUROPEAN PATENT SPECIFICATION

(45) Date of publication of patent specification: **30.09.87**

(51) Int. Cl.⁴: **H 02 J 13/00, H 04 B 3/56**

(21) Application number: **83303349.1**

(22) Date of filing: **09.06.83**

(54) **A data transmission system.**

(30) Priority: **09.06.82 JP 99914/82**

(43) Date of publication of application:
**11.01.84 Bulletin 84/02**

(45) Publication of the grant of the patent:
**30.09.87 Bulletin 87/40**

(84) Designated Contracting States:
**DE FR GB IT**

(56) References cited:
**FR-A-685 115**
**US-A-1 928 610**

**Patent Abstracts of Japan, vol.3 No.22 (E-93) 24 February 1979. page 76 E.93**

(73) Proprietor: **SHARP KABUSHIKI KAISHA**
**22-22 Nagaike-cho Abeno-ku**
**Osaka 545 (JP)**

(72) Inventor: **Ise, Masahiro**
**2187-A18-203 Mise-cho**
**Kashihara-shi Nara-ken (JP)**
Inventor: **Tanaka, Hidehiko**
**2613-1 Ichinomoto-cho**
**Tenri-shi Nara-ken (JP)**
Inventor: **Machino, Katsuyuki**
**31-101 Higashikidera-cho 1-chome**
**Nara-shi Nara-ken (JP)**

(74) Representative: **Wright, Peter David John et al**
**R.G.C. Jenkins & Co. 12-15, Fetter Lane**
**London EC4A 1PL (GB)**

Courier Press, Leamington Spa, England.

**Description**

This invention relates to data transmission systems.

More specifically, this invention relates to a data transmission system of the type having a communication channel comprising first and second conductors and a data transmitter operable to apply data signals on to said channel, the transmitter having means for inductively applying data signals to a first of said conductors, and means which exhibits a low impedance at the data signals frequency for providing, during transmission, a data path from said first conductor to the other conductor.

A system of this type is known from FR—A—685115. In that known system the first and second conductors are part of an urban electricity supply system which includes at least one transformer, and the data path is provided across the terminals of the transformer in order to ensure that data signals are not passed on by the transformer to other parts of the electricity supply system and also to ensure that the transformer winding does not attenuate the data signals.

The system of the present invention is characterised in that the data path includes switch means provided for selectively opening and closing said data path, whereby the data path can be closed during transmissions by said transmitter, and opened during other periods so as to prevent the low impedance means from acting as a load for other transmissions along the channel.

Thus, when the switch means is closed, the transmitter is not prevented from performing accurate transmission of data signals even when a low impedance load is connected between the two conductors and, when the switch means is open, the low impedance of the data path does not act as a load for other possible transmissions on the channel.

Preferably, the system also includes a further low impedance means and a further switch means for providing a further data path between said first and second conductors, the transmitter being coupled to said first conductor at a position between said data paths, whereby both switch means can be operated in accordance with the desired flow of data signals along the communication channel.

Therefore, in this case, a choice can be made as to whether to transmit the data in one direction along the channel or, in the opposite direction.

Other preferred features and advantages of the invention will be apparent from the following description given by way of example of a conventional system and of embodiments of the invention, reference being made to the accompanying drawings, in which:

Fig. 1 shows a circuit diagram of a conventional data transmission system;

Fig. 2 shows a circuit diagram of a data transmission system according to an embodiment of the present invention;

Fig. 3 shows an equivalent circuit of a data transmission system of Fig. 2;

Fig. 4 shows a circuit diagram of a data transmission system of another embodiment of the present invention; and

Fig. 5 shows a circuit diagram of a data transmission system according to another embodiment of the present invention.

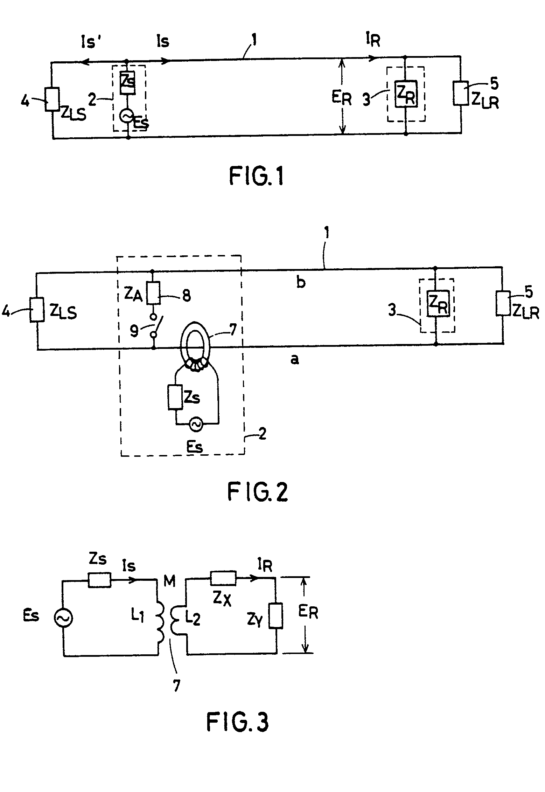

Fig. 1 shows a circuit diagram of a general data transmission system using the parallel signal input method. The general transmission system comprises transmission wirings or lines 1 which can be power supply conductors or power wirings, a transmitting station 2 (where $E_S$ is a transmitting output voltage and $Z_S$ is an output impedance of the transmitting station 2), a receiving station 3 (where $Z_R$ is an input impedance of the receiving station 3), loads 4 and 5 (where $Z_{LS}$ and $Z_{LR}$ are impedances of loads 4 and 5, respectively).

A receiving voltage $E_R$ can be expressed by the following equation.

$$E_R = \frac{Z_0}{Z_S + Z_0} \cdot E_S \tag{1}$$

$$\text{where } \frac{1}{Z_0} = \frac{1}{Z_{LS}} + \frac{1}{Z_{LR}} + \frac{1}{Z_R}$$

$$\doteqdot \frac{1}{Z_{LS}} + \frac{1}{Z_{LR}} \tag{2}$$

$$(\text{let } Z_R \gg Z_{LS}, Z_{LR})$$

Further, if $Z_{LS} \gg Z_{LR}$, the receiving voltage $E_R$ is given by the following equation in view of equations (1) and (2).

$$E_R = \frac{Z_{LR}}{Z_S + Z_{LR}} \cdot E_S \tag{1'}$$

Accordingly, signals can not be received on the receiving station by using the voltage $E_R$ when $Z_{LR} \fallingdotseq 0$. But, because a transmission current $I_{S'} \fallingdotseq 0$, a receiving current $I_R$ is given as follows:

$$I_R = I_S \fallingdotseq \frac{E_S}{Z_S} \tag{3}$$

where the transmission current $I_R$ is maximum. Accordingly, signals can be received on the receiving station by using the current $I_R$.

But, when $Z_{LS} \fallingdotseq 0$, the receiving current $I_R$ and the transmission current $I_S$ and the receiving voltage $E_R$ are given as follows:

$$I_S = I_R \fallingdotseq 0, \quad E_R \fallingdotseq 0 \tag{4}$$

Effective signals for transmitting data are not applied on the transmitting wirings or lines 1 by using either the current $I_R$ or the voltage $E_R$.

With this difficulty in mind, it is an object of the following embodiment to provide an improved data transmission system which is not prevented from performing accurate transmission even by a load connected between the two wirings or lines while the data are transmitted.

Fig. 2 shows a circuit diagram of a data transmission system according to an embodiment of the present invention. Components similar to those in Fig. 1 are represented by the same reference numbers.

A transformer 7 on the transmitting station 2 generates transmitting signals upon a transmission wiring $a$ by using a magnetic coupling. An impedance element 8 (having an impedance $Z_A$) provides a current induced on the wiring $a$ to the other transmission wiring b. The impedance element 8 exhibits a low impedance at the data transmission frequency, the impedance element 8 exhibiting a high impedance in response to the application of a power supply frequency while signals are transmitted by the power wirings. For example, the impedance element 8 may be a capacitor or a series resonance circuit including a capacitor and a coil, so that the resonance frequency is made identical with the transmitting frequency.

A switching means 9 is switched ON when signals are transmitted only from the transmitting station 2 so that the impedance element 8 does not at other times function as a load on another transmission system.

Fig. 3 shows an equivalent circuit of Fig. 2. In Fig. 3, there are connected a series impedance $Z_X$, a signal detector impedance $Z_Y$, a mutual inductance M, the coils $L_1$ and $L_2$ having the numbers of turns $L_1$ and $L_2$. Using the symbols in Fig. 2, the impedances $Z_X$ and $Z_Y$ can be written as follows:

$$\frac{1}{Z_X} = \frac{1}{Z_{LS}} + \frac{1}{Z_A} \quad \text{(where switching means 9 is ON.)} \tag{5}$$

$$\frac{1}{Z_Y} = \frac{1}{Z_{LR}} + \frac{1}{Z_R} \fallingdotseq \frac{1}{Z_{LR}} \quad \text{(where } Z_R \gg Z_{LR}) \tag{}$$

A receiving current $I_R$ as shown in Fig. 3 is expressed by the following equation (6).

$$I_R = \frac{\pm j \cdot \omega \cdot M \cdot E_S}{\omega^2 (L_1 \cdot L_2 - M^2) + j \cdot \omega \cdot L_2 \cdot Z_S + (Z_X + Z_Y)(j \cdot \omega \cdot L_1 - Z_S)} \tag{6}$$

where the signs $\pm$ are determined by the direction in which the coil is wound. Because the impedance $Z_A$ is set equal nearly zero, the impedance $Z_X$ becomes equal nearly zero. If $L_1$ is selected to be $\omega L_1 \gg Z_S$, the receiving current $I_R$ is expressed by the following equation (6').

$$I_R \fallingdotseq \frac{\pm j \cdot \omega \cdot M \cdot E_S}{\omega^2 (L_1 \cdot L_2 - M^2) + j \cdot \omega (L_2 \cdot Z_S + L_1 \cdot Z_Y)} \tag{6'}$$

If the transformer 7 is high coupled, the mutual inductance M becomes.

$$M^2 = L_1 \cdot L_2$$

By simplifying the equation (6'), the result can be written as:

$$I_R \fallingdotseq \frac{\pm M \cdot E_S}{L_2 \cdot Z_S + L_1 \cdot Z_Y} \tag{7}$$

and a receiving voltage $E_R$ becomes:

$$E_R = Z_Y \cdot I_R = \frac{\pm M \cdot Z_Y \cdot E_S}{L_2 \cdot Z_S + L_1 \cdot Z_Y} \tag{8}$$

Accordingly, when $Z_Y \to \infty$, equations (7) and (8) are expressed as follows:

$$I_R \to 0, \quad E_R \to \pm \frac{M \cdot E_S}{L_1} = \pm \sqrt{\frac{L_2}{L_1}} \cdot E_S \tag{9}$$

When $Z_Y \to 0$, the equations (7) and (8) are expressed as follows:

$$I_R \to \pm \frac{M \cdot E_S}{L_2 \cdot Z_S} = \pm \frac{E_S}{Z_S} \sqrt{\frac{L_1}{L_2}}, \quad E_R \to 0 \tag{10}$$

Signals can be applied to the wirings by the current or voltage in spite of the value of the impedance $Z_{LR}$ and the impedance $Z_Y$.

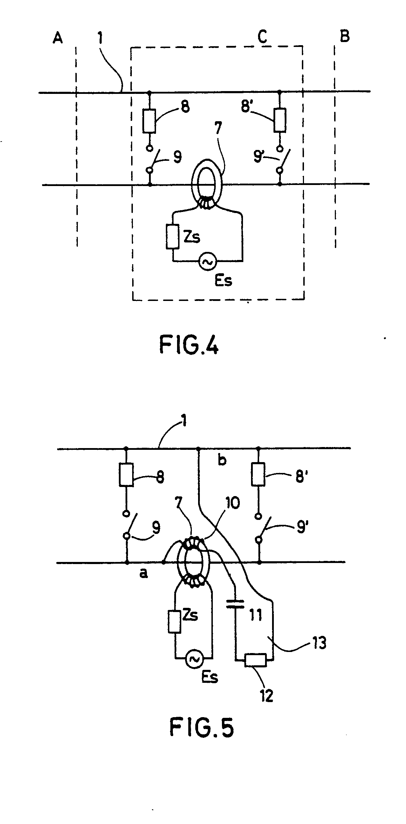

When another transmission system is present, a series circuit including the impedance 8 and the switching means 9 as shown Fig. 2 may be set opposite to the transformer 7. Fig. 4 shows a circuit diagram of a transmission system which comprises the above series circuits to the both neighbors of the transformer 7 according to another embodiment of the present invention.

Operation modes of the data transmission system as shown Fig. 4 can set as shown in a table 1 when the switching means 9 and 9' are ON and OFF. Accordingly, signals can be transmitted in a desired direction in response to the connection of the switching means 9 and 9'.

TABLE 1

| Switch 9 | Switch 9' | Operation of system |
|----------|-----------|---------------------|
| OFF | OFF | The signals are not transmitted from station C.<br>The signals can be transmitted between stations A and B. |
| OFF | ON | When the signals are transmitted between stations A and C, the signals are transmitted between neither station A and B, or B and C.<br>(The station A is isolated from the station B). |
| ON | OFF | When the signals are transmitted between stations B and C, the signals are transmitted between neither stations A and B, or stations A and C.<br>(the station A is isolated from the station B). |
| ON | ON | The signals are not transmitted from station C, and the station A is isolated from the station B. |

In the present invention, receiving is executed by both a current coupling used as a magnetic coupling of the coils and a voltage coupling connected to two transmitting wirings. If the transmission system comprises a receiving circuit having a simple structure such as the embodiment of the present invention, receiving can be executed easily.

Fig. 5 shows a circuit diagram of the data transmission system including a transmission/receiving circuit used as a core according to another embodiment of the present invention. As shown in Fig. 5, a coil 10 induces a current for flowing on a wiring $a$ by using the magnetic flux coupling because the coil 10 is combined with the core of the transformer 7. Further, the coil 10 induces a voltage by connecting itself to wirings $a$ and $b$. A capacitor 11 forms a series resonance circuit with the coil 10, to induce only the signals corresponding to the transmitting frequency. An input impedance 12 is part of the receiving station 13. When the switching means 9 and 9' are ON, a voltage of the both ends of the impedance 12 in the receiving station 13 becomes nearly zero, so that no signals are received at the receiving station.

In the above description, the data transmission system includes two transmitting wirings, in which one of the transmission wirings is connected by magnetic coupling, an element is provided for serving as a low impedance at the data transmission frequency, the element being connected between the two wirings. In

4

the case where low impedance loads are connected between both ends of two wirings, some signals as data can be transmitted by using either current or voltage.

## Claims

1. A data transmission system having a communication channel (1) comprising first and second conductors (a, b) and a data transmitter (2) operable to apply data signals on to said channel, the transmitter (2) having means (7) for inductively applying data signals to a first (a) of said conductors, and means (8) which exhibits a low impedance at the data signals frequency for providing, during transmission, a data path from said first conductor (a) to the other conductor (b), characterised in that the data path includes switch means (9) provided for selectively opening and closing said data path, whereby the data path can be closed during transmissions by said transmitter (2), and opened during other periods so as to prevent the low impedance means (8) from acting as a load for other transmissions along the channel.

2. A system as claimed in claim 1, including a further low impedance means (8') and a further switch means (9') for providing a further data path between said first and second conductors (a, b), the transmitter (2) being coupled to said first conductor (a) at a position between said data paths, whereby both switch means (9, 9') can be operated in accordance with the desired flow of data signals along the communication channel.

3. A system as claimed in claim 1 or claim 2, including a receiver operable to produce an output having a first component which is derived from the voltage difference between the conductors (a, b) and a second component which is derived from the current flowing along one of the conductors (a, b).

4. A system as claimed in claim 3, wherein said receiver and said transmitter use a common inductive means (7) for applying data to and deriving data from the first conductor (a).

5. A system as claimed in any preceding claim, wherein said first and second conductors (a, b) are power supply conductors.

6. A system as claimed in any preceding claim, wherein the low impedance means (8) is a capacitor or a series resonant circuit including a capacitor and a coil, so that the resonant circuit frequency is identical with the data signals frequency.

## Patentansprüche

1. Datenübertragungseinrichtung mit einem Übertragungskanal (1) mit ersten und zweiten Leitern (a, b) und einem Datenübertrager (2), der Datensignale in den Kanal eingespeist, wobei der Übertrager (2) Vorrichtungen (7) zur induktiven Ankopplung der Datensignale an einen ersten Leiter (a) und Vorrichtungen (8) enthält, die eine niedrige Impedanz bei der Datensignalfrequenz aufweisen, so daß während der Übertragung ein Datenweg von dem ersten Leiter (a) zu dem zweiten Leiter (b) gebildet wird, dadurch gekennzeichnet, daß der Datenweg Schaltvorrichtungen (9) zur selektiven Öffnung und Schließung des Datenweges aufweist, wodurch der Datenweg während der Übertragung durch den Übertrager (2) geschlossen und während anderer Perioden geöffnet werden kann, um zuverhindern, daß die Vorrichtung (8) mit niedriger Impedanz für andere Übertragungen über den Kanal als Last wirkt.

2. Vorrichtung nach Anspruch 1, dadurch gekennzeichnet, daß sie eine weitere Vorrichtung (8') mit niedriger Impedanz und eine weitere Schaltvorrichtung (9') zur Schaffung eines weiteren Datenweges zwischen dem ersten und zweiter Leiter (a, b) aufweist, wobei der Übertrager (2) in einer bestimmten Position zwischen den Datenwegen mit dem ersten Leiter (a) verbunden ist, wodurch beide Schaltvorrichtungen (9, 9') entsprechend dem gewünschten Datensignalfluß entlang des Übertragungskanals betrieben werden können.

3. Vorrichtung nach Anspruch 1 oder 2, dadurch gekennzeichnet, daß sie einen Empfänger zur Erzeugung eines Ausgangssignals aufweist, das eine von der Spannungsdifferenz zwischen den Leitern (a, b) abgeleitete erste Komponente und eine von dem Stromfluß entlang der Leiter (a, b) abgeleitete zweite Komponente aufweist.

4. Vorrichtung nach Anspruch 3, dadurch gekennzeichnet, daß der Empfänger und der Übertrager eine gemeinsame induktive Vorrichtung (7) zum Ein- und Auskoppeln der Daten in bzw. von dem ersten Leiter (a) verwenden.

5. Vorrichtung nach einem der vorhergehenden Ansprüche, dadurch gekennzeichnet, daß die ersten und zweiten Leiter, (a, b) Spannungsversorgungsleitungen sind.

6. Vorrichtung nach einem der vorhergehenden Ansprüche, dadurch gekennzeichnet, daß die Vorrichtung (8) mit geringer Impedanz ein Kondensator oder ein Serienresonanzkreis mit einem Kondensator und einer Spule ist, so daß die Resonanzfrequenz des Kreises identisch mit der Frequenz der Datensignale ist.

## Revendications

1. Système de transmission de données comportant un canal de communication (1) composé de premier et second conducteurs (a, b), et un transmetteur de données (2) apte à opérer pour appliquer des signaux de données audit canal, le transmetteur (2) comportant un moyen (7) pour appliquer des signaux de données par induction à un premier (a) desdits conducteurs, et un moyen (8) qui présente une impédance faible à la fréquence des signaux de données pour, pendant une transmission, établir un circuit de données depuis ledit premier conducteur (a) jusqu'à l'autre conducteur (b), caractérisé en ce que le circuit de données comprend un moyen formant commutateur (9) prévu pour ouvrir et fermer sélectivement ledit circuit de données, celui-ci pouvant ainsi être fermé pendant des transmissions opérées par le transmetteur (2) et ouvert pendant d'autres périodes, afin d'empêcher le moyen à faible impédance (8) d'agir comme une charge pour d'autres transmissions le long du canal.

2. Système tel que défini dans la revendication 1, comprenant un autre moyen à faible impédance (8') et un autre moyen formant commutateur (9') pour établir un autre circuit de données entre lesdits premier et second conducteurs (a, b), le transmetteur (2) étant couplé audit premier conducteur (a) en un point situé entre lesdits circuits de données, pour qu'ainsi les deux moyens formant commutateurs (9, 9') puissent être actionnés en fonction de la circulation de signaux de données voulue le long du canal de communication.

3. Système tel que défini dans la revendication 1 ou la revendication 2, comprenant un récepteur apte à opérer pour délivrer une sortie comportant une première composante dérivée de la différence de tension entre les conducteurs (a, b) et une seconde composante dérivée du courant qui circule le long de l'un des conducteurs (a, b).

4. Système tel que défini dans la revendication 3, dans lequel ledit récepteur et ledit transmetteur utilisent un moyen inducteur (7) commun pour appliquer des données au premier conducteur (a) et en recevoir de celui-ci.

5. Système tel que défini dans l'une quelconque des revendications précédentes, dans lequel lesdits premier et second conducteurs (a, b) sont des conducteurs d'alimentation électrique.

6. Système tel que défini dans l'une quelconque des revendications précédentes, dans lequel le moyen à faible impédance (8) est un condensateur ou un circuit de résonance en série comprenant un condensateur et une bobine, de sorte que la fréquence de circuit de résonance est identique à la fréquence de signaux de données.

FIG.1

FIG.2

FIG.3

FIG.4

FIG.5